# EUROPÄISCHE PATENTANMELDUNG

(11) **EP 0 590 470 A1**
(43) Veröffentlichungstag der Anmeldung: **06.04.1994**
(21) Anmeldenummer: 93115137.7
(22) Anmeldetag: 21.09.1993
(51) Int. Cl.: B65D 85/48

(54) **Sortier- und Abstellpalette für Einzelglasscheiben**

(30) Priorität: 22.09.1992 DE 9212630 U
(71) Anmelder: HEGLA Fahrzeug- u. Maschinenbau GmbH & Co. KG, D-37688 Beverungen (DE)
(72) Erfinder: Glaser, Siegfried, D-37688 Beverungen (DE)
(74) Vertreter: Reichel, Wolfgang, Dipl.-Ing.

(57) **Zusammenfassung**

Sortier- und Abstellpalette (1) für auf einer ihrer Schmalseiten aufstehenden Einzelglasscheiben (2) mit durch Fachteiler gebildeten Fächern, in denen die Glasscheiben einzeln gehaltert sind, wobei die Fachteiler aus mindestens einem gespannten Seil (7) bestehen, das in der Palette vom unteren Rahmen (3) bis zum oberen Rahmen (6) verläuft und das vorzugsweise ein Endlosseil ist und durch Umlenkrohre (5,8) unterhalb der Auflagefläche (4) am unteren Rahmen (3) und am oberen Rahmen gehaltert ist.

## Beschreibung

Die Erfindung betrifft eine Sortier- und Abstellpalette für auf einer ihrer Schmalseiten aufstehenden Einzelglasscheiben mit durch Fachteiler gebildeten Fächern, in dem die Glasscheiben einzeln gehaltert sind.

Einzelglasscheiben in unterschiedlichsten Abmessungen, Stärken und Oberflächenbeschaffenheiten werden vertikal unter 4 - 5^{o} Neigung auf einseitige oder beidseitige Abstellvorrichtungen abgestellt. Diese Abstellvorrichtungen sind meistens A-förmig ausgebildet und haben eine Neigung von 4 - 6^{o}. Die Einzelscheiben werden voreinander abgestellt.

Um Kratzer und sonstige Beschädigungen zu vermeiden, und um die Einzelscheiben einzeln im Zugriff zu haben, gibt es auch Fächer -Sortiervorrichtungen. Hierbei werden die Einzelscheiben in vertikale Einzelfächer eingestellt oder eingeschoben.

Die Einstellbreite der einzelnen Fächer wird je nach anfallender Glasstärke zwischen 10 und 20 mm ausgeführt. Die einzustellenden oder einzuschiebenden Scheiben sind in den Abmessungen sehr unterschiedlich. Die kleinste Kantenlänge liegt bei ca. 120 mm. Die größten einzustellenden Scheiben werden bestimmt durch ihr Gewicht und die Handlingsmöglichkeit. Die Fachhöhen werden meistens bei 2.000 mm begrenzt. Die Fachtiefe kann beliebig sein bzw. können die Fächer grundsätzlich hinten ohne Begrenzung ausgeführt werden, so daß lange Scheiben nach hinten hin durchgesteckt werden. An der Einschubvorderseite stehen die Scheibenkanten in einer Flucht.

Als untere Auflage, auf der die Glaskanten aufgesetzt und verschoben werden, werden durchgehende Platten aus Holz oder Kunststoff eingesetzt. Damit die Scheiben beim Einschieben in die Fächer seitlich geführt werden, sind als Fachbegrenzung an beiden Seiten Führungsleisten aus Holz oder Kunststoff üblich.

Die vertikale Fachteilung kann man ebenfalls aus flächigen Platten vornehmen. Dies ist aber heute nicht mehr üblich. Man setzt als vertikale Fachteiler Stäbe aus Holz oder Metall ein. Die Stäbe sind entweder blank, lackiert oder kunststoffummantelt. Die Anordnung der Stäbe in der Flächenebene erfolg A-förmig oder vom vorderen Bereich des Faches schräg nach oben verlaufend.

Die Stäbe werden in ihrer vertikalen Position durch obere und untere Fixierungsbohrungen bzw. Raster gehalten. Wenn diese Stäbe lose eingesetzt und gehalten werden, so müssen sie eine entsprechende Dimensionierung haben, damit keine seitliche Verformung durch das angestellte Glas auftritt. Hierdurch werden die Fachteiler dann relativ breit, in der Regel 18 - 20 mm. Will man Platz sparen - und dies ist notwendig - so müssen die Fachteiler dünner ausgebildet werden. Damit eine seitliche Verformung dann nicht so stark ist, muß man diese dünneren Fachteiler dann einzeln in iher Längsachse spannen.

Damit man die Einzelgläser auch einfach in die Fächer einschieben kann, benötigt man vor den senkrechten Fachteilern eine Auflage und eine seitliche Führung. Dies erreicht man sicher, indem die Fachteiler erst nach einem Abstand von ca. 50 - 60 mm von der Vorderkante der Aufstell- und Schubfläche beginnen.

Die einzelnen Einschubfächer sind mit Zahlen gekennzeichnet, so daß man hier Sortierinformationen und eine Einstellorientierung erhält.

Bedingt durch die Konstruktion ist die Herstellung und damit der Preis sehr aufwendig.

Nimmt man Fachteiler, die nicht einzeln gespannt werden müssen, so sind diese entsprechend breit und je nach gewünschter Anzahl der Einstellfächer (meistens 50 Stück) wird dann die gesamte Palette sehr breit.

Durch die scharfen Glaskanten und Ecken werden die Aufstellflächen und der Boden sowie die seitlichen Führungsleisten stark verschlissen.

Bei Verschleiß verhaken sich die Scheiben im Boden. Schiebt man die Scheiben dann mit Gewalt weiter, so treten Kantenbeschädigungen und Einmuschelungen auf.

Sobald starker Verschleiß der Boden vorhanden ist, ist die gesamte Palette unbrauchbar oder nur mit großem Aufwand zu reparieren.

Je stärker die Scheibe ist oder je größer sie ist, desto mehr erhöht sich das Eigengewicht der Scheibe. Große Scheiben, die sowieso schon schwieriger zu handhaben sind, lassen sich dann nur mit relativ großer Kraft in die Fächer einschieben.

Wenn die vertikalen Fachteiler nicht gepolstert, d.h. mit Kunststoff ummantelt sind, so kann es beim Einschieben und beim Anstellen zu Beschädigungen der oberen Glaskante kommen. Empfindliche Gläser, wie z. B. beschichtete Spiegel oder bedampfte Funktionsgläser werden ebenfalls durch das Enschieben und Anstellen an die vertikalen Fachteiler beschädigt, wenn diese nicht mit geeigneten Kunststoffummantelungen versehen sind.

Der Erfindung liegt die Aufgabe zugrunde, eine Sortier- und Abstellpalette für Einzelglasscheiben zu schaffen, die bei einfachem Aufbau eine raumsparende Halterung von Einzelglasscheiben gewährleistet.

Die Aufgabe wird durch die Merkmale des kennzeichnenden Teils des Anspruchs 1 gelöst.

Die Fachteiler bestehen aus vertikalen, kunststoffummantelten Seilen. Diese Seile haben als Kern ein Drahtseil oder einen ähnlich festen Kern. Vorteilhafte Weiterbildungen sind durch die Unteransprüche gegeben.

Die Teilungsebene aus den Seilen kann V-förmig ausgebildet sein. Das vordere Seil kann vertikal und das zweite Seil kann zweckmäßigerweise nach oben divergierend verlaufen.

Durch diese Anordnung kommt man mit zwei Seilen pro Teilungsebene aus und es werden von der kleinsten bis zur maximal größten einzustellenden Scheibe entsprechende Anlagepunkte geschaffen. Das Teilungsseil ist endlos.

In der gewünschten Teilung wird das Seil jeweils um die Umlenkrohre geschlungen und dann beim letzten Fach befestigt.

Das Spannen des so aufgelegten Seils kann dadurch erfolgen, indem ein Umlenkungsrohr verstellbar ist. Vorzugsweise ist das hintere obere Umlenkungsrohr verstellbar. Als Führung für dieses Umlenkungsrohr dienen zwei U-Führungen. Das Spannen kann durch Gewindespindeln erfolgen, die am Umlenkungsrohr angebracht sind und die gegen das Spannwiderlager gezogen werden. Es reichen in der Regel zwei Spannvorrichtungen, wobei man bei größeren Längen auch eine beliebige Anzahl von Spannvorrichtungen anbringen kann.

Das gespannte Seil hat dann eine entsprechende Verformungsstabilität, so daß die durch das Anstellen der Scheiben entstehenden Seitenkräfte nicht zu starken Durchbiegungen führen.

Das Seil kann jederzeit nachgespannt werden.

Die gespannten Seile haben an den Umlenkpunkten einen so großen Reibschluß, daß sie sich seitlich nicht verschieben. Man kann also auf seitliche Führungen, wie z. B. Zahnleisten etc., verzichten. Lediglich beim Auflegen wird eine Teilungsschablone eingesetzt. Rechtwinklig zu den Teilungsebenen können unten die Glasauflager angeordnet sein. Die Auflager sind aus gleitfähigem und verschleißarmem Kunststoff. Die Auflager sind so angeordnet, daß kleine und große Scheiben eingeschoben werden können.

Vor den Fächern kann eine Tragrolle mit Führungsnuten angebracht sein. Die Führungsnuten entsprechen exakt der Fachteilung.

Die Scheiben werden in die Führungsnut der Tragrolle vor dem gewünschten Fach aufgestellt und dann erfolgt das Einschieben durch Abrollen auf der Tragrolle. Ein einfaches Finden der Fächer und ein leichtes Einschieben ist möglich. Sobald die Scheibe eine bestimmte Einschubtiefe erreicht hat, wird sie je nach Abmessung und Gewicht auf die Auflagen abgesetzt und dann weiter eingeschoben.

Sobald die Glasvorderkante über die Tragrolle hinweggeschoben ist, steht sie dann auf allen Auflagern fest auf und die Tragrolle ist wieder völlig frei.

Das Herausziehen der Einzelscheiben erfolgt in gleicher Weise.

Beim Herausziehen der Scheiben rollen diese mit der Hinterkante über die Tragrolle auf ein Abstellauflager. Das Auflager ist mit Gummi gepolstert, so daß die Scheibenkanten nicht beschädigt werden.

Die weiter vorn genannten Nachteile sind praktisch komplett in Vorteile umgewandelt.

Die Herstellungskosten sind wesentlich geringer als bei allen bisherigen Lösungen. Mit deutlich geringerem Platzbedarf können die gleiche Anzahl Einstellfächer geschaffen werden.

Die Tragrolle ermöglicht das einfache Aufsetzen direkt vor der Fachposition, und ein leichtes Einschieben und Herausziehen der Scheibe.

Die entsprechend angeordneten Auflager, die mit gleitfähigen Kunststoffprofilen bestückt sind, ermöglichen ein beschädigungsfreies Ein- und Ausschieben der Scheiben.

Die Auflager sind leicht auswechselbar.

Das kunststoffummantelte Seil bietet bei geringstem Platzbedarf optimale Fachteilungseigenschaften.

Das Seil kann beliebig nachgespannt werden.

Eine Ausführungsform der Erfindung wird nachstehend anhand der Zeichnungen beispielshalber beschrieben. Es werden auch Sortier- und Abstellpaletten nach dem Stand der Technik erläutert. In den Figuren zeigen:
- Fig. 1: eine Sortier- und Abstellpalette nach der Erfindung von der Seite,
- Fig. 2: einen Ausschnitt des unteren Rahmens der Sortier- und Abstellpalette nach Fig. 1, wobei das untere Umlenkrohr und die Führungsrolle gut erkennbar sind,
- Fig. 3: einen Teil des oberen Rahmens der Sortier- und Abstellpalette nach Fig. 1, wobei das obere Umlenkrohr erkennbar ist,
- Fig. 4: eine Ansicht durch einen Teilschnitt in vertikaler Richtung der Sortier- und Abstellpalette nach Fig. 1 von vorn,
- Fig. 5: eine bekannte Sortier- und Abstellpalette für Einzelglasscheiben von vorn,
- Fig. 6: die Sortier- und Abstellpalette nach Fig. 5 von der Seite,
- Fig. 7: einen horizontalen Schnitt durch die Sortier- und Abstellpalette nach Fig. 5,
- Fig. 8: eine andere bekannte Sortier- und Abstellpalette von vorn,
- Fig. 9: die Sortier- und Abstellpalette nach Fig. 8 von der Seite und
- Fig. 10: einen Ausschnitt der Sortier- und Abstellpalette nach Fig. 8 von vorn.

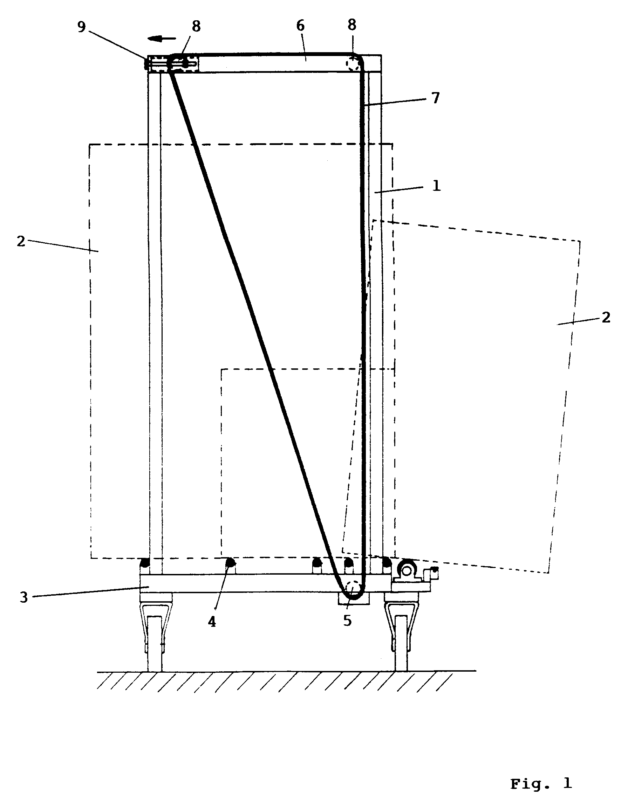

Fig. 1. zeigt eine Sortier- und Abstellpalette 1 für Einzelglasscheiben 2, die einen unteren Rahmen 3 mit Auflagefläche 4 und einen oberen Rahmen 6 aufweist. Am unteren Rahmen 3 unterhalb der Auflagefläche 4 befindet sich ein unteres Umlenkrohr 5 und am oberen Rahmen 6 befinden sich zwei obere Umlenkrohre 8. Um die Umlenkrohre 5 und 8 ist pro Fachteiler ein Endlosseil 7 gelegt. Die nebeneinanderliegenden Endlosseile 7 werden mit Hilfe von zwei Spannvorrichtungen 9 so stark gespannt, daß sie als zwei Fachteiler zwischen zwei nebeneinanderliegenden Fächern für Einzelglasscheiben 2 dienen können. In der Figur erkennt man verschieden große Einzelglasscheiben 2, von denen sich zwei in der Sortier- und Abstellpalette befinden und eine gerade eingeschoben wird. Wegen des V-förmigen Verlaufs des Endlosseils 7 ergibt sich für Einzelglasscheiben 2 verschiedener Größe eine ordentliche Halterung.

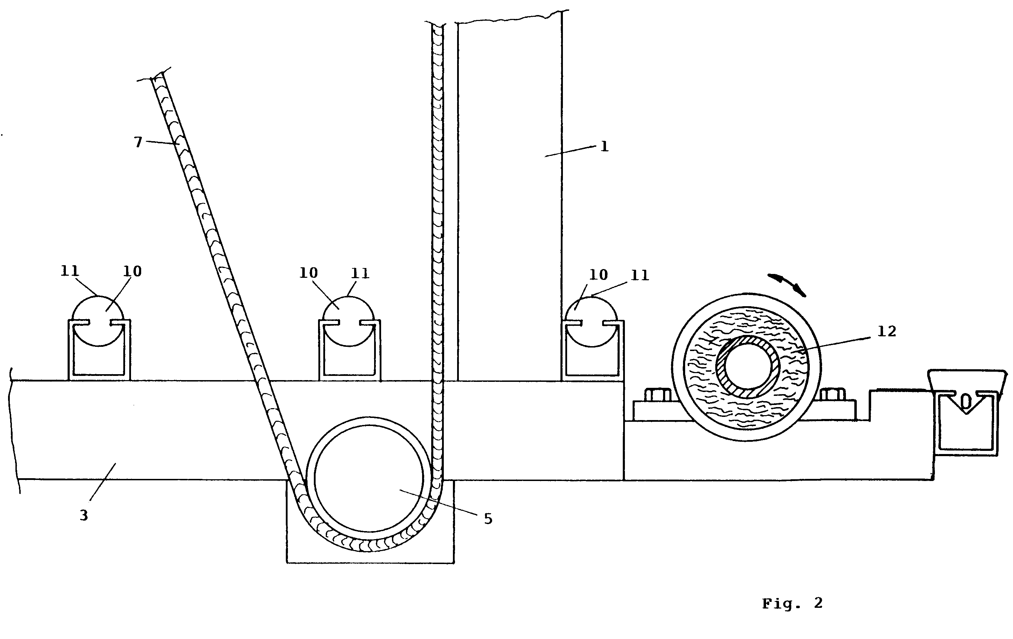

Fig. 2 zeigt den unteren Rahmen 3, der Sortier- und Abstellpalette 1 mit dem unteren Umlenkrohr 5, um das das Endlosseil 7 gelegt ist. Man erkennt die die Auflagefläche 4 bildenden Auflagestäbe 10, die pro Fach Auflagepunke 11 bilden. Am unteren Rahmen 3 ist auch an seinem nach außen gerichteten Ende eine Führungsrolle 12 vorgesehen. Die in die Fächer einzuschiebenden Einzelglasscheiben 2 werden über die mit Nuten versehene Führungsrolle in die Fächer eingeschoben.

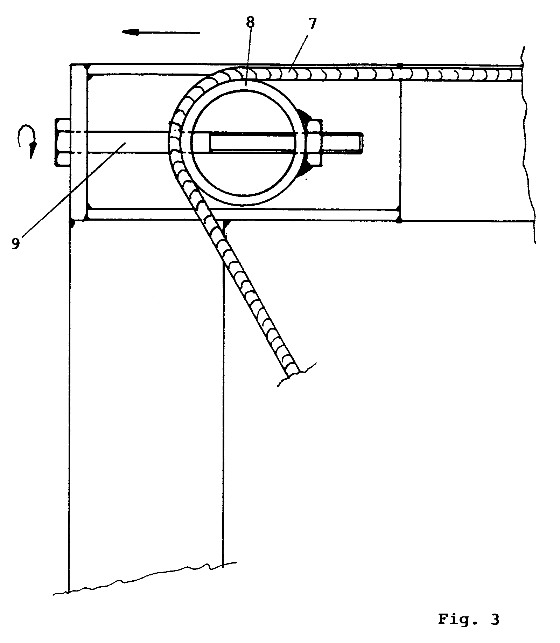

Fig. 3 zeigt eines der oberen Umlenkrohre 8, und zwar dasjenige, an dem die Spannvorrichtung 9 zum Spannen des Endlosseils 7 vorgesehen ist. Das Umlenkrohr 8 wird über die Spannvorrichtung 9 so weit nach links verschoben, bis das Endlosseil 7 eine Spannung aufweist, daß es als Fachteiler wirkt.

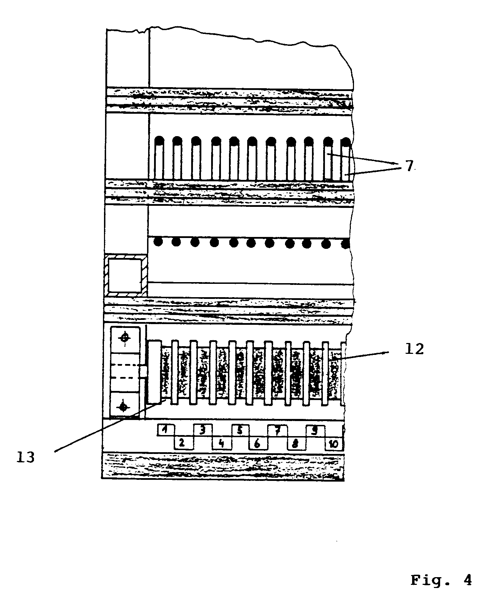

Der in Fig. 4 dargestellte Schnitt durch die Sortier- und Abstellpalette läßt von vorn die Einzelheiten der Führungsrolle 12 erkennen. Insbesondere weist die Führungsrolle 12 Nuten 13 auf, die entsprechend der durch die Endlosseile 7 gebildeten Fächer beabstandet sind. Die Führungsrolle 11 ermöglicht ein verschleißfreies Einschieben der Einzelglasscheiben in die Fächer bei exakter Führung.

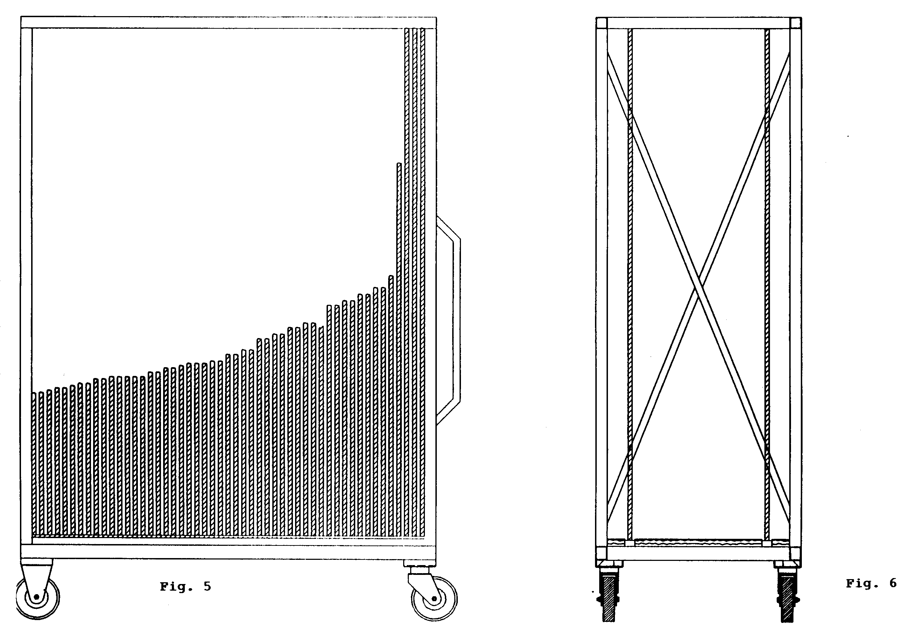

Fig. 5 zeigt eine herkömmliche Sortier- und Abstellpalette, bei der Rohre als Fachteiler verwendet sind. Es ist deutlich erkennbar, daß der Durchmesser der Rohre im Vergleich zu der Breite der Fächer verhältnismäßig groß ist. Insofern ergibt sich hier eine schlechte Raumausnutzung.

Fig. 6 zeigt die Sortier- und Abstellpalette nach Fig. 5 von der Seite. Die Fächer sind durch die hintereinanderliegenden Rohre definiert.

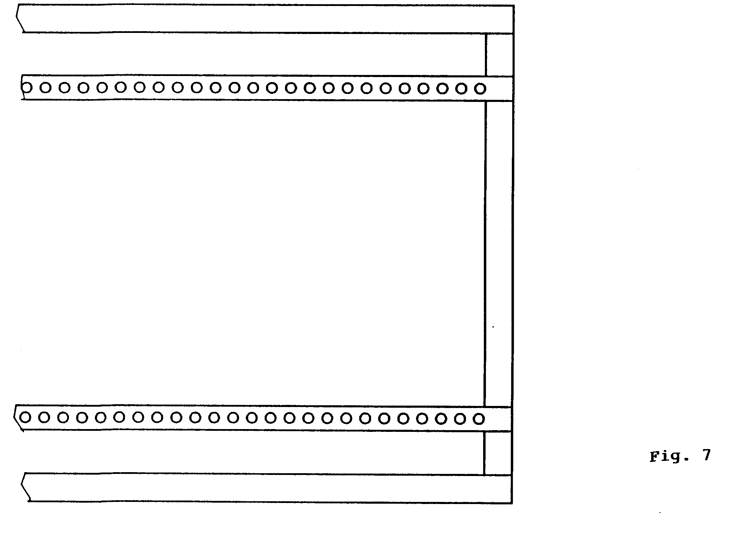

Fig. 7 zeigt einen Schnitt durch die Palette nach Fig. 5 bzw. nach Figur 6, wobei man die Rundbohrungen für die einzelnen Fachteiler bildenden Rohre erkennt.

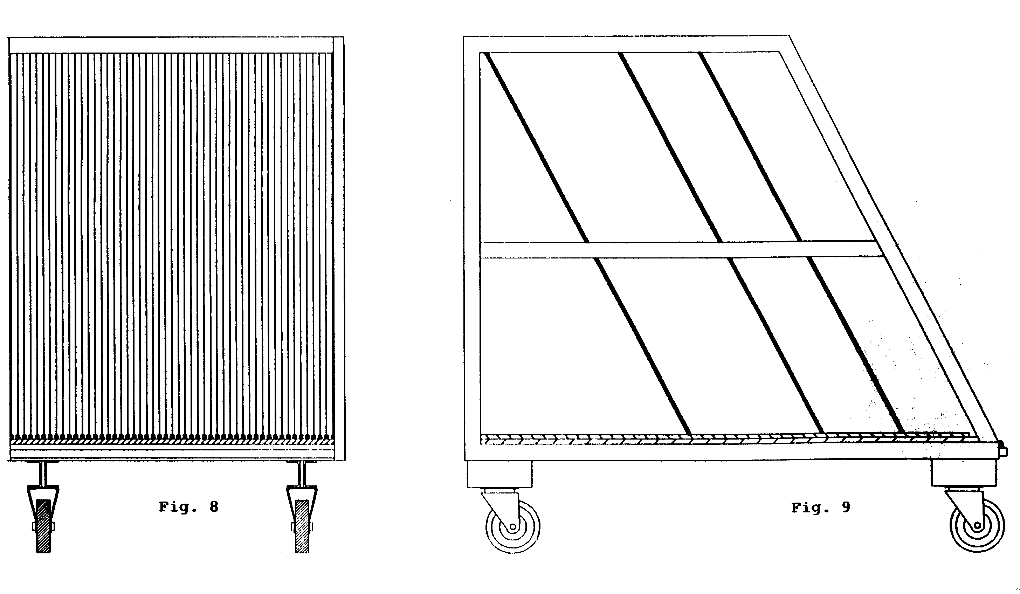

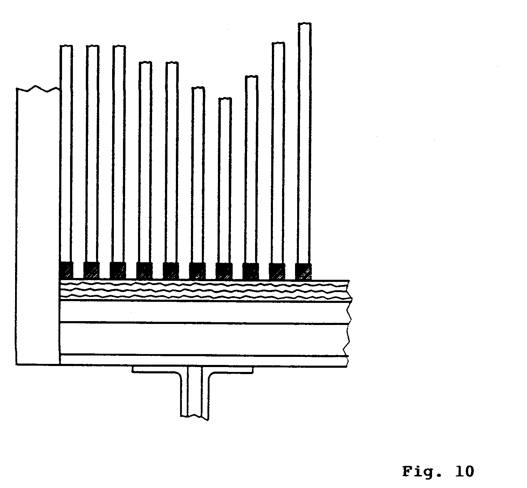

Fig. 8 zeigt eine andere bekannte Ausführungsform einer Sortier- und Abstellpalette von der Seite, wobei als Fachteiler gespannte Stahlteiler verwendet werden. Die Fig. 9 zeigt die Anordnung nach Fig. 8 von der Seite, wobei die Richtung der gespannten Teiler erkennbar ist.

Fig. 10 zeigt einen vergrößerten Ausschnitt aus der Abbildung nach Fig. 8 der bekannten Sortier- und Abstellpalette, wobei die Fachteiler von der unteren Auflagefläche nach oben ragen.

## Patentansprüche

1. Sortier- und Abstellpalette für auf einer ihrer Schmalseiten aufstehenden Einzelglasscheiben mit durch Fachteiler gebildeten Fächern, in denen die Glasscheiben einzeln gehaltert sind,
**dadurch gekennzeichnet,**
daß die Fachteiler aus mindestens einem gespannten Seil (7) bestehen, das in der Palette vom unteren Rahmen (3) bis zum oberen Rahmen (6) verläuft.

2. Sortier- und Abstellpalette nach Anspruch 1,
**dadurch gekennzeichnet,**
daß das als Fachteiler verwendete gespannte Seil (7) schräg von vorn unten nach hinten oben verläuft.

3. Sortier- und Abstellpalette nach Anspruch 1 oder 2,
**dadurch gekennzeichnet,**
daß das als Fachteiler verwendete Seil (7) einen vertikalen Teil aufweist.

4. Sortier- und Abstellpalette nach einem der Ansprüche 1 bis 3
**dadurch gekennzeichnet,**
daß das als Fachteiler verwendete Seil (7) ein Endlosseil ist und durch Umlenkrohre (5,8) unterhalb der Auflagefläche (4) am unteren Rahmen (3) und am oberen Rahmen gehaltert ist.

5. Sortier- und Abstellpalette nach Anspruch 4,
**dadurch gekennzeichnet,**
daß am oberen Rahmen zwei Umlenkrohre (8) vorgesehen sind, von denen das eine verstellbar gelagert ist.

6. Sortier- und Abstellpalette nach Anspruch 5,
**dadurch gekennzeichnet,**
daß die Verstellbarkeit des einen oberen Umlenkrohres (8) durch eine Spannvorrichtung (9) gegeben ist.

7. Sortier- und Abstellpalette nach Anspruch 6,
**dadurch gekennzeichnet,**
daß die Spannvorrichtung (9) durch mindestens zwei Gewindespindeln gebildet ist.

8. Sortier- und Abstellpalette nach einem der vorhergehenden Ansprüche, daß die Seile (7) kunststoffummantelte Stahlseile sind.

9. Sortier- und Abstellpalette nach einem der vorhergehenden Ansprüche,
**dadurch gekennzeichnet,**
daß vor den Fächern eine Führungsrolle (12) mit Führungsnuten (13) angebracht ist.

10. Sortier- und Abstellpalette nach Anspruch 9,
**dadurch gekennzeichnet,**
daß der Abstand und die Breite der Führungsnuten (13) dem Abstand bzw. der Breite der Fächer (zwischen 7) entspricht.

11. Sortier- und Abstellpalette nach einem der vorhergehenden Ansprüche, daß die Auflagefläche (4) durch Auflagestäbe (10) gebildet wird, die quer zu den Fächern (zwischen 7) verlaufen und damit in den Fächern Auflagepunkte (11) für die eingeschobenen Einzelglasscheiben (2) bilden.
